(19) **Europäisches Patentamt**
**European Patent Office**
**Office européen des brevets**

(11) Veröffentlichungsnummer : **0 502 393 B1**

(12) # EUROPÄISCHE PATENTSCHRIFT

(45) Veröffentlichungstag der Patentschrift :
**22.03.95 Patentblatt 95/12**

(51) Int. Cl.$^6$ : **H02H 3/33, H01H 83/04**

(21) Anmeldenummer : **92103054.0**

(22) Anmeldetag : **24.02.92**

(54) **Fehlerstromschutzschalter.**

(30) Priorität : **02.03.91 DE 4106652**

(43) Veröffentlichungstag der Anmeldung :
**09.09.92 Patentblatt 92/37**

(45) Bekanntmachung des Hinweises auf die
Patenterteilung :
**22.03.95 Patentblatt 95/12**

(84) Benannte Vertragsstaaten :
**AT BE CH DE ES FR GB IT LI NL**

(56) Entgegenhaltungen :
**EP-A- 0 264 314**
**DE-A- 2 030 613**
**FR-A- 2 283 542**
**US-A- 3 787 708**

(73) Patentinhaber : **ABB PATENT GmbH**
**Kallstadter Strasse 1**
**D-68309 Mannheim (DE)**

(72) Erfinder : **Berthold, Rainer**
**Wielandstrasse 4**
**W-6901 Gaiberg (DE)**

(74) Vertreter : **Rupprecht, Klaus, Dipl.-Ing. et al**
**c/o ABB Patent GmbH,**
**Postfach 10 03 51**
**D-68128 Mannheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen Fehlerstromschutzschalter gemäß dem Oberbegriff des Anspruches 1.

Untersuchungen betreffend Funktionsfähigkeit von Fehlerstromschutzschaltern haben ergeben, daß eine bestimmte Anzahl von Fehlerstromschutzschaltern, die in Anlagen, im Haushalt und dgl. installiert sind, fehlerhaft waren. Im wesentlichen waren eher ältere Fehlerstromschutzschalter defekt; vereinzelt ist festgestellt worden, daß auch solche, die noch keine zehn Jahre alt waren, nicht oder nicht ausreichend ausgelöst haben, was auf Alterungseffekte schließen läßt.

Um zu vermeiden, daß ein defekter Fehlerstromschutzschalter in einer Anlage unbemerkt verbleibt, muß dieser bzw. müssen diese in einer Anlage befindlichen von Zeit zu Zeit geprüft werden. Zu diesem Zweck besitzt jeder Fehlerstromschutzschalter eine Prüftaste, deren Prüfkreis als Wicklung durch den Summenstromwandler hindurchgeleitet wird und einen Schaltkontakt aufweist, der mittels der Prüftaste geschlossen wird. In diesem Fall erzeugt der Stromfluß über den Prüfkreis in der Sekundärwicklung des Stromwandlers ein Signal, der den Auslöser erregt, welcher über ein Schaltschloß die Schaltkontakte des Fehlerstromschutzschalters öffnet, siehe Burkhard, G., Schaltgeräte der Elektrotechnik, Verlag Technik, Berlin 1985, Abschnitt 8.5, insbesondere Bild 8.48, oder DE-Z ETZ Band 111 (1990) Heft 22/23, Seite 1189. Auch G. Biegelmeier hat in der Literaturstelle "Schutzmaßnahmen in Niederspannungsanlagen, Österreichischer Gewerbeverlag, Wien 1978, Seite 228 und folgende, näheres zur Prüfung einer Fehlerstromschutzschaltungsanordnung berichtet.

Insbesondere in Hausinstallationsanlagen besteht die Gefahr, daß der Betreiber die Prüftaste nicht oder in zu großen zeitlichen Abständen betätigt, so daß nicht sichergestellt ist, ob die in solchen Hausinstallationsanlagen befindlichen Fehlerstromschutzschalter tatsächlich während ihrer gesamten Einbauzeit funktionstüchtig sind.

Aus der EP-PS 0 220 408 ist ein selbstüberwachender Fehlerstromschutzschalter bekannt geworden, dessen Schutzschaltungsanordnung eine elektronische Schaltungsanordnung ist. Zusätzlich zu der Sekundärwicklung befindet sich an dem Summenstromwandler eine zusätzliche Wicklung, in die periodisch kurzzeitige Stromstöße eingespeist werden. Zusammen mit einer an die Sekundärwicklung anschließenden elektronischen Grenzwertschaltung und der elektromagnetischen Halteeinrichtung bildet die die kurzzeitigen Stromstöße erzeugende Schaltungskomponente einen schwingfähigen Oszillator; die Schwingfähigkeit dieses Oszillators wird bei Auftreten eines sog. echten Fehlerstromes unterbrochen, wodurch der Versorgungsstrom für den Haltemagnetauslöser abgeschaltet wird, der Haltemagnetauslöser abfällt und die Schaltkontakte öffnet. Mit der in der EP-PS 0 220 408 beschriebenen Schaltungsanordnung wird erreicht, daß dann, wenn die elektronischen Bauteile ausfallen, also bei Fortfall der periodischen Stoßstromimpulse, die Spule stromlos wird, so daß der Haltemagnetauslöser abfällt. Da der Auslöser selbst nicht überprüft wird, kann die hier beschriebene Schaltungsanordnung mindestens bei netzspannungsunabhängigen Fehlerstromschutzschaltern, bei denen die Sekundärwicklung unmittelbar mit dem Auslöser verbunden ist, nicht zur Selbstüberwachung herangezogen werden.

Aufgabe der Erfindung ist es, einen Fehlerstromschutzschalter der eingangs genannten Art zu schaffen, der sich dauernd in bestimmten Abständen selbst überprüft.

Diese Aufgabe wird erfindungsgemäß gelöst durch die kennzeichnenden Merkmale des Anspruches 1.

Wie eingangs erwähnt, ist es erforderlich, den Fehlerstromschutzschalter durch Drücken der Prüftaste von Zeit zu Zeit zu überprüfen, um zu erkennen, ob der Fehlerstromschutzschalter in Ordnung ist. Wenn die Bedienperson nun nicht weiß, daß beim Prüfvorgang - "Drücken der Prüftaste" - der Fehlerstromschutzschalter auslösen muß, bietet nicht einmal das Drücken der Prüftaste ausreichenden Schutz. Klebt nämlich der Anker, dann ist die Prüftaste zwar gedrückt worden, aber der Schalter löst trotzdem nicht aus. Daher erfolgt die Prüfung des Schalters automatisch, so daß automatisch nach einer vorbestimmten Betriebsdauer der Prüfstromkreis geschlossen und das Auslöserelais zum Ansprechen gebracht wird. Die automatische Prüfung kann dabei in solchen Zeitabständen durchgeführt werden, daß ein Kleben sicher verhindert ist.

Daß das Auslöserelais angesprochen hat, kann am einfachsten dadurch festgestellt werden, daß gemäß Anspruch 2 die Schaltkontakte in den Netzleitern geöffnet werden. Dabei wird gleichzeitig auch mit überprüft, ob im Bereich des Schaltschlosses oder der Kontaktstellen der Schaltkontakte Fehler vorhanden sind, z. B. die Kontaktstücke der Kontaktstellen verschweißt sind.

Die Einrichtung, mit der der Prüfstromkreis geschlossen wird, steuert gemäß kennzeichnenden Merkmalen des Anspruches 3 die Prüfkontaktstelle an.

Damit festgestellt werden kann, ob die Schaltkontakte geöffnet sind, ist gemäß Anspruch 4 eine Überwachungseinrichtung dem Prüfstromkreis zugeordnet, die das Öffnen der Schaltkontakte in den Netzleitern aufgrund eines Prüfstromes detektiert und ggf. sofort wieder schließt.

Daß dabei die Schaltkontakte nach kurzer Zeit wieder geschlossen werden, ergibt sich entsprechend dem Einsatzgebiet des Fehlerstromschutzschalters.

2

Die Einrichtung, mit der die Prüfkontaktstelle betätigt wird, kann beispielsweise als Zeitschaltuhr ausgebildet sein; sie kann auch durch die Funksignale des "Zeitzeichens" angesteuert werden, d. h. durch diejenigen Funksignale, durch die bestimmte Funkuhren synchronisiert werden.

Damit die Prüfung nicht gerade dann vorgenommen wird, wenn beispielsweise tagsüber die Stromversorgung aufrechterhalten bleiben muß, kann die Einrichtung durch eine Tag-Nacht-Helligkeitsänderung oder durch die Tag-Nacht-Geräuschpegeländerung angesteuert werden. Außerdem besteht die Möglichkeit, den Prüfvorgang während des sog. Nullstromdurchganges durchzuführen.

Nach einer weiteren Ausführungsform der Erfindung kann den Schaltkontakten in den Netzleitern ein Detektor zugeordnet sein, der beim Öffnen der Schaltkontakte deren Stellung detektiert und der Überwachungseinrichtung meldet. Im einfachsten Fall ist der Detektor als eine den Schaltkontakten zugeordnete und mit diesen mechanisch gekoppelte Hilfskontaktstelle ausgebildet.

In den meisten Fällen genügt es bzw. in vielen Fällen ist es sogar notwendig, daß lediglich das Auslöserelais anspricht. In diesem Falle sind gemäß kennzeichnenden Merkmalen des Anspruches 11 weitere Mittel vorgesehen, die das Auslöserelais in einer Stellung festhalten, die noch nicht zur Öffnung der Schaltkontakte führt und nach Beendigung der Prüfung den Anker oder den Auslösestößel wieder in die auslösebereite Stellung verbringen.

Wie diese weiteren Mittel ausgebildet sind, ist in bevorzugter Weise dem Anspruch 12 zu entnehmen.

Wenn das Auslöserelais als Haltemagnetauslöser mit einem U-förmigen Joch und einem Permanentmagneten, einem die Schenkel überdeckenden Klappanker sowie einer Auslösespule ausgebildet ist, wobei der Auslösestößel aus dem Gehäuse herausragt, dann wird in zweckmäßiger Weise der Stößel durch eine Öffnung im Gehäuse geführt und er wirkt im Prüffall auf den Anker derart ein, daß dieser bei Auslösen nach Zurücklegen nur eines Teils des Auslöseweges gegen den Stößel anschlägt, wobei der Antrieb den Klappanker wieder in auslösebereite Stellung zurückstellt.

Dadurch wird lediglich das Auslöserelais betätigt, was, wie oben erwähnt, dann ausreicht, wenn verhindert sein muß, daß die Schaltkontakte geöffnet werden.

Um zu erkennen, ob das Auslöserelais angesprochen hat, sind gemäß Anspruch 14 am Stößel Mittel zur Detektierung des Anschlagens des Klappankers am Stößel vorgesehen. Diese Mittel können beispielsweise Mikroschaltelemente sein.

Da sich beim Lösen des Ankers vom Joch bzw. beim Schließen in der Spulenwicklung durch die magnetische Flußänderung eine Spannung induziert, und zwar gemäß der Formel

$$E = - d\phi/dt$$

kann man diese Flußänderung in geeigneter Weise zur Funktionsprüfung verwenden. Zu diesem Zweck wird die Wicklung in geeigneter, bekannter Weise elektrisch angezapft und mit einem Signalverstärker gekoppelt, dessen verstärkten Signale einer Zentrale zugeleitet werden können.

Eine besonders vorteilhafte Ausgestaltung der Erfindung kann dahin gehen, daß der Antrieb, mit dem der Stößel gegen den Klappanker gebracht wird, als Tauchankersystem ausgebildet ist, wobei der Stößel selbst der Tauchanker ist. Damit nach Wegfall des Prüfstromes bzw. nach Beendigung des Prüfvorganges der Stößel wieder in seiner Ausgangsstellung zurückgezogen wird, in der der Klappanker freie Beweglichkeit hat, ist am Stößel in zweckmäßiger Weise eine Feder vorgesehen, die diesen nach dem Prüffall in die Ausgangsstellung zurückzieht.

Als Antrieb können auch mikrosystemtechnische Elemente, z. B. Piezoantriebe oder Magnetorestriktionselemente verwendet werden.

Die Prüf- und Überwachungseinrichtung kann in besonders vorteilhafter Weise in einem an einen handelsüblichen Fehlerstromschutzschalter anbaubaren, der Kontur dieses Fehlerstromschutzschalters entsprechenden Anbaugehäuse untergebracht sein. Wenn der Stößel ein Schwenkstößel ist, der durch eine Ausnehmung im Gehäuse des handelsüblichen Fehlstromschutzschalters in die Bewegungsbahn des Auslösestößels oder des Ankers hineingebracht wird, dann ergibt sich hieraus eine besonders vorteilhafte weitere Vereinfachung.

Weitere vorteilhafte Ausgestaltungen und Verbesserungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:

Figur 1       eine Schaltungsanordnung eines bekannten Fehlerstromschutzschalters,

Figur 2       eine Schaltungsanordnung eines erfindungsgemäßen Fehlerstromschutzschalters nach einer ersten Ausführungsform,

Figur 3       eine weitere Ausführungsform der Erfindung, dargestellt als schematische Schaltungsanordnung,

| | |
|---|---|
| Figur 4 | eine Einsicht in einen Auslöser, bei dem die Erfindung verwirklicht ist, |
| Figur 5 | eine Ausgestaltung eines Antriebes für einen Stößel, |
| Figur 6 | eine weitere Ausführungsform der Erfindung, |
| Figur 7 | eine schematische Darstellung einer fünften Ausführungsform der Erfindung, |
| Figuren 8 und 9 | ein sechstes Ausführungsbeispiel der Erfindung, in zwei Ansichten und |
| Figur 10 | eine Variante des sechsten Ausführungsbeispieles. |

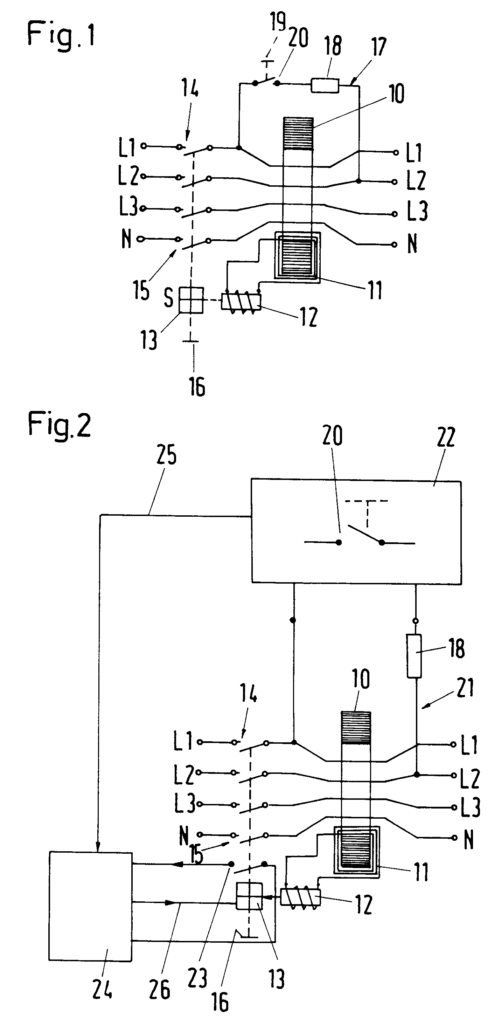

Die Figur 1 zeigt die Schaltungsanordnung eines Fehlerstromschutzschalters, der in die Leitungen L1, L2 und L3 sowie in den Neutralleiter N eingesetzt ist. Die Leitungen L1 bis L3 und N sind durch einen Summenstromwandler 10 als Primärwicklung hindurchgeführt; der Summenstromwandler 10 enthält eine Sekundärwicklung 11, an der ein Auslöserelais 12 angeschlossen ist, welches mit einem Schaltschloß 13 gekoppelt ist, mit dem Schaltkontakte 14 und 15 in den Phasenleitungen L1 bis L3 bzw. im Neutralleiter N betätigt werden. Mit dem Schaltschloß ist ferner ein Betätigungsknopf 16 gekoppelt, mit dem der Schalter, insbesondere also das Schaltschloß 13 und damit die Schaltkontaktstücke 14, 15, wieder geschlossen werden können. Zwischen den beiden Phasenleitern L1 und L2 befindet sich ein Prüfstromkreis 17, der einen Vorwiderstand 18 sowie eine durch eine Prüftaste 19 betätigbare Kontaktstelle 20 enthält. Zur Simulierung eines Fehlerstromes bis zum 2 1/2-fachen des Nennfehlerstromes, der durch geeignete Dimensionierung des Vorwiderstandes 18 eingestellt werden kann, wird die Kontaktstelle 20 durch Drücken der Prüftaste 19 (auch Taster 19 genannt), geschlossen, so daß in der Sekundärwicklung 11 ein Strom induziert wird, der zur Betätigung des Auslöserelais 12 und damit zum Öffnen der Schaltkontakte 14/15 geeignet ist.

Mittels der Prüftaste 19 muß der Fehlerstromschutzschalter von Zeit zu Zeit überprüft werden; insbesondere ist es dabei erforderlich, auch das Auslöserelais 12 zu betätigen, damit festgestellt werden kann, ob der dem Auslöserelais zugeordnete Anker (siehe weiter unten) nicht am Kern klebt.

Die Figur 2 zeigt eine erste Ausführungsform der Erfindung. In den Prüfstromkreis 21, in den gemäß Figur 1 der Vorwiderstand 18 und die Kontaktstelle 20 eingebracht ist, ist zusätzlich eine Einrichtung 22 zur Ansteuerung der Kontaktstelle 20 vorgesehen, die nach bestimmten Zeitabständen die Kontaktstelle 20 schließt. Der dadurch erzeugte Fehlerstrom induziert einen Auslösestrom in der Sekundärwicklung 11, wodurch das Schaltschloß 13 betätigt wird und die Schaltkontakte 14 und 15 öffnen. Mit den Schaltkontakten gekoppelt ist ein Hilfsschalter 23, der mit einer Überwachungseinrichtung 24 verbunden ist, mit der das Schließen des Hilfsschalters 23 - oder Öffnen - detektiert wird. Wenn bei Erzeugen des simulierten Fehlerstromes der Hilfsschalter 23 nicht betätigt wird, dann kann die Überwachungseinrichtung 24 ein entsprechendes Signal abgeben; sie wird nämlich von der Einrichtung 22 über eine Leitung 25 über die Schließung der Prüfstromkontaktstelle 20 informiert.

Wenn eine Öffnung der Schaltkontakte 14 und 15 sowie eine Betätigung des Hilfsschalters 23 erfolgt ist, wird die Überwachungseinrichtung 24 mittels einer z. B. als motorgetriebene Nockenwelle oder Elektromagnet ausgebildeten elektromechanischen Kupplung 26 das Schaltschloß 13 wieder in Einschaltstellung bewegen, wodurch die Schaltkontakte 14 und 15 geschlossen und die Kontaktstelle des Hilfsschalters 23 betätigt wird. Das Schließen erfolgt selbstverständlich sofort, damit der Strom nicht zu lange unterbrochen bleibt. Der Alarm, der von der Überwachungseinrichtung 24 abgegeben wird, kann entweder akustisch sein oder an eine nicht näher dargestellte Zentrale übermittelt werden.

Die Einrichtung 22 zur Ansteuerung der Prüfkontaktstelle 20 ist im einfachsten Falle als Zeitschaltuhr ausgebildet.

Anstatt einer Zeitschaltuhr 22 kann natürlich jede andere Art einer Ansteuerung der Prüfkontaktstelle 20 benutzt werden. Es kann dies das sog. "Zeitzeichen" sein; dieser Empfang ist heute kein Problem mehr. Beispielsweise kann man ohne weiteres eine integrierte Schaltung aus einer Funkuhr der Firma Junghans als Empfängerschaltung benutzen.

In einer weiteren Ausführung können auch die Helligkeitsänderungen des Tag-Nacht-Rythmus unter Einsatz geeigneter Solarzellen ausgenutzt werden; in zweckmäßiger Weise würde man dann den Fehlerstromschutzschalter lediglich bei Nacht prüfen. Es besteht auch die Möglichkeit, einen Geräuschpegelmesser einzusetzen, der dann die Ansteuerung der Kontaktstelle veranlaßt, wenn nachts, vorzugsweise nach Mitternacht, ein bestimmter Minimalgeräuschpegel über eine längere Zeit festgestellt bzw. gemessen wurde. Eine weitere Möglichkeit besteht darin, den Prüfvorgang während des sog. Nullstromdurchgangs durchzuführen. Natürlich kann die Prüfkontaktstelle auch durch eine Zentrale betätigt werden, die die Zeitschaltuhr etc. und die Überwachungseinrichtung aufweist.

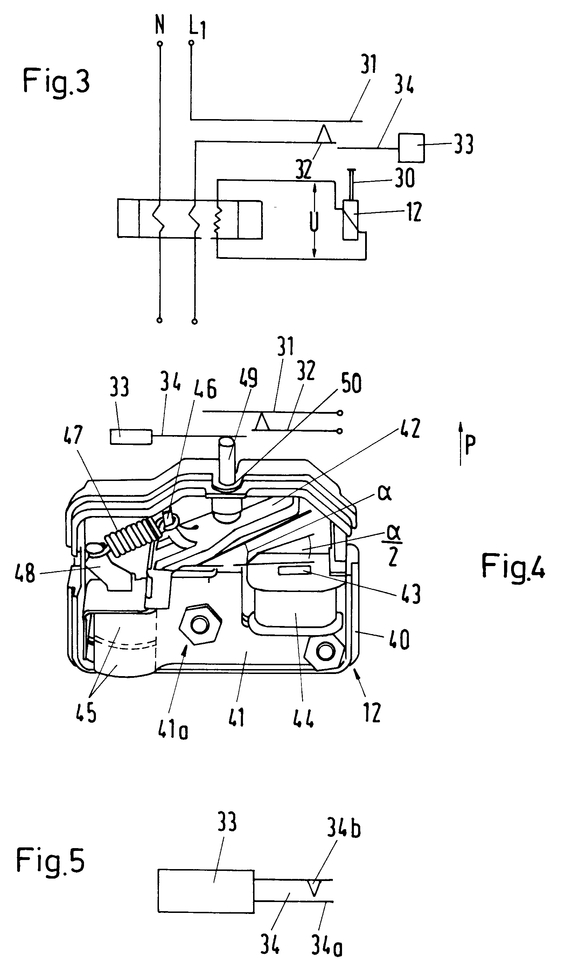

Es kann Fälle geben, in denen das Abschalten des Fehlerstromschutzschalters mit Öffnen der Schaltkontakte 14/15 nicht wünschenswert ist. In diesem Falle können Ausführungen gemäß den Figuren 3 bis 5 eingesetzt werden.

Man erkennt in der Figur 3 eine schematisch dargestellte Fehlerstromschutzschalteranordnung ähnlich der der Figur 1 mit einem Auslöserelais 12, das über einen Auslösestößel 30 normalerweise ein Schaltschloß betätigt (wie in Figur 1 oder 2 dargestellt), d. h. lediglich einen Kontakthebel 31 von einer Festkontaktstelle 32 abhebt. Ein Antrieb 33, der von der Einrichtung 22 zum Betätigen des Stößels 34 angesteuert wird, drückt im Fall eines simulierten Fehlerstromes diesen Stößel 34 in den Bewegungsbereich des Aulösestößels 30 hinein; dadurch gelangt der Auslösestößel 30 nicht in Kontakt bzw. in Berührung mit dem Kontaktelement 31 und verhindert das Aufschlagen des Kontaktes 32.

Zur Überwachung der Funktion bildet man beispielsweise den Stößel 34 als Kontaktstrecke gemäß Figur 5 aus. Beim Hochfahren des Auslösestößels 49 wird ein Federelement 34a gegen ein Kontaktstück 34b gedrückt, wodurch bestätigt wird, daß sich der Klappanker 42 vom Joch gelöst hat. Wenn der Klappanker 42 wieder in die auslösebereite Stellung verbracht wird, dann wird die Kontaktstelle 34a/34b geöffnet, was anzeigt, daß sich der Klappanker geschlossen hat. Der Antrieb 33 betätigt dabei gleichzeitig die Feder 34a und die Kontaktstelle 34b gemeinsam und fährt beide Elemente vor dem Prüfvorgang in den Bewegungsbereich des Auslösestößels 49 und nach dem Prüfvorgang aus dem Bewegungsbereich heraus.

Ein in einem im Handel erhältlichen Fehlerstromschutzschalter eingebautes Auslöserelais, zeigt die Figur 4. Innerhalb eines Gehäuses 40 befindet sich ein U-förmiges Joch 41, an dessen einem Schenkel 41a ein Klappanker 42 aufgelagert ist, wogegen der andere Schenkel 43 eine Auslösespule 44 trägt. An dem einen Schenkel 41a ist ein strichliert dargestellter Permanentmagnet 45 angebracht, der das Joch in bestimmter Weise vormagnetisiert, damit der Klappanker 42 angezogen ist. Der Klappanker 42 besitzt einen Fortsatz 46, an dem ein Ende einer Zugfeder 47 eingehängt ist, deren anderes Ende an einem Haken 48, der mit dem Joch fest verbunden ist, angeschlossen ist. Durch die Oberseite des Gehäuses 40 ragt ein Auslösestößel 49, der in einer Öffnung 50 des Gehäuses verschiebbar geführt ist; er wirkt mit dem Klappanker 42 zusammen und wird bei einem Auslösevorgang, bei dem im Joch 41 ein magnetischer Fluß erzeugt wird, der dem von dem Permanentmagneten 45 erzeugten Fluß entgegengesetzt ist, durch Abschwenken des Klappankers 42 nach oben in Pfeilrichtung P bewegt.

In der Figur 4 ist der Auslöser mit geöffneten Gehäuse dargestellt (selbstverständlich ist das Auslöserelais geschlossen, in dem ein Gehäuseabschlußdeckel (nicht gezeigt) auf das Gehäuse 40, welches eine Art Gehäuseunterteil bildet, aufgesetzt und verschlossen wird).

Wie in der Figur 3 dargestellt, wirkt der Aulösestößel 49, der dem Auslösestößel 30 der Figur 3 entspricht, mit einem beweglichen Kontaktstück 31 und einem festen Kontaktstück 32 zusammen, dergestalt, daß bei einem echten Fehlerstrom der Auslösestößel 49 das bewegliche Kontaktstück 31 vom Festkontaktstück 32 abhebt. Ein Problem kann darin bestehen, daß im Auslösefall der Klappanker 42 am Joch 41, das den Kern bildet, kleben bleibt, so daß der Fehlerstromschutzschalter gerade nicht abschaltet. Dies kann durch die Simulierung eines Fehlerstromes festgestellt werden.

Damit aber in einem Fehlerstromsimulierungsfall die Schaltkontakte 14/15 nicht abschalten, wird mittels des Antriebes 33 der Stößel 34 vor den Auslösestößel 49 geschoben, so daß der Auslösestößel 49 nicht seine gesamte Wegstrecke zurücklegen kann.

Im Normalfall würde der Klappanker 42 einen Winkel alpha im ausgeschalteten Zustand einnehmen; in zweckmäßiger Weise wird der Winkel alpha durch den Stößel 34 verkleinert, z. B. auf alpha/2.

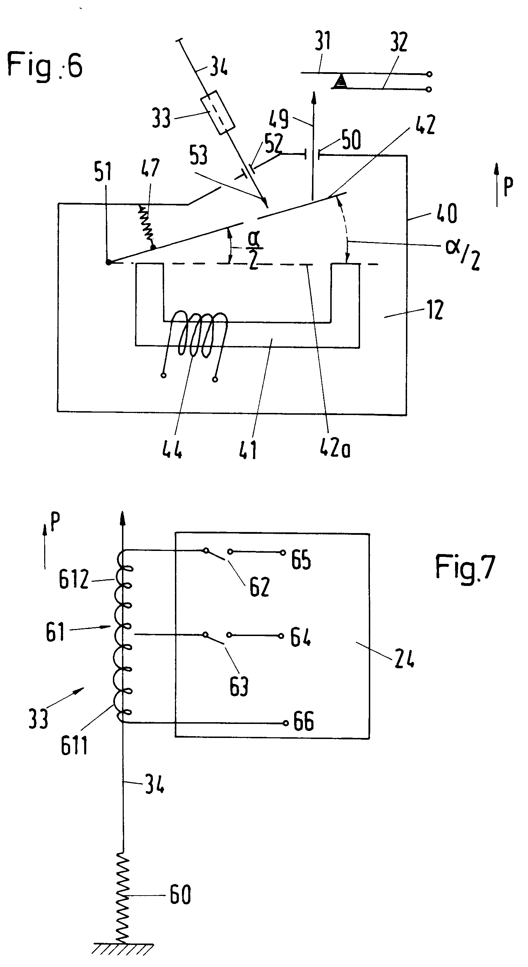

Wie dies in bevorzugter Weise realisiert werden kann, zeigt schematisch die Figur 6. Man erkennt das Gehäuse 40, in dem sich das Joch 41 befindet, welches mit der Spule 44 zusammenwirkt. Der Klappanker 42 ist um eine Achse 51 drehbar (die in der Figur 4 nicht deutlich ersichtlich ist); man erkennt schematisch die Feder 47, die einerseits am Klappanker andererseits am Gehäuse 40 befestigt ist; daß dies so wie in Figur 6 dargestellt ist, als gehäusefeste Anlenkung angesehen wird, liegt daran, daß das Teil 48 der Figur 4 fest mit dem Joch 41 und das Joch 41 fest mit dem Gehäuse 40 verbunden bzw. gekoppelt sind. Über die Öffnung 50 im Gehäuse 40 greift der Auslösestößel 49 hindurch, der von dem Klappanker in Pfeilrichtung P betätigt wird. Der Antrieb 33 besitzt einen durch ihn hindurchgehenden Stößel 34, der nicht unmittelbar in den Bewegungsbereich des Auslösestößels 49 gelangt, sondern über eine weitere Öffnung 52 im Gehäuse 40 annähernd senkrecht gegen den geöffneten Klappanker 42 gerichtet ist. Im Falle einer simulierten Auslösung wird der Stößel 34 ins Innere des Gehäuses 40 hineingefahren und bildet so einen durch eine Pfeilspitze 53 angedeuteten Anschlag, gegen den sich der Klappanker 42 legt, wobei der Winkel, den dieser mit der Verbindungslinie der freien Enden der beiden Jochschenkel des Joches bildet, z. B. alpha/2 beträgt, d. h., daß sich der Klappanker nur um den halben Weg öffnet, der nicht ausreicht, den beweglichen Kontakt 31 von dem Festkontaktstück 32 abzuheben bzw., wenn eine Ausführungsform wie in Figur 1 oder 2 dargestellt den Fehlerstromschutzschalter öffnet, ein Schaltschloß zu öffnen bzw. auszulösen.

Der Antrieb 33 wird von der Zeitschaltuhr oder einer ähnlichen Einrichtung angesteuert, wobei die Ansteuerung so erfolgen kann, daß vor Erzeugen des Prüfstromes der Antrieb 33 den Stößel 34 an die Anschlagstelle in das Gehäuse 40 hineingefahren hat; nachdem dies der Fall ist, wird der Prüfstrom durch Schließen der Kontaktstelle erzeugt, wodurch der Auslöser 12 betätigt wird, in dem der Klappanker 42 abfallen kann. Wenn die Simulation beendet ist, wird der Antrieb 33 soweit betätigt, daß der Klappanker 42 in die strichliert dargestellte Einschaltstellung 42a verschwenkt wird; damit bei einem echten Fehlerstrom eine Auslösung und eine Öffnung der Kontaktstellen erfolgt, wird der Stößel 34 danach vollständig in diejenige Stellung zurückgezogen, in der er die volle Auslösebewegung des Klappankers 42 nicht behindert.

Die Figur 7 zeigt eine Ausführungsform des Antriebes 33 mit dem Stößel 34, der von einer Fesselfeder 60 in eingefahrener Stellung gehalten wird, d. h. in derjenigen Stellung, in der die Bewegung des Klappankers 42 nicht behindert wird. Der Stößel 34 wird angesteuert von einer Spule 61 in Art eines Tauchankermagneten, wobei in der Überwachungseinrichtung 24 eine erste Schaltkontaktstelle 62 und eine zweite Schaltkontaktstelle 63 vorgesehen ist. In der ersten Phase, wenn also der Stößel 34 in seine Überprüfungsstellung (siehe Figur 6) gefahren werden soll, wird zunächst die zweite Schaltkontaktstelle 63 geschlossen, so daß ein Stromfluß von einer Klemme 64 über den in der Figur 7 dargestellten unteren Teil 611 der Spule 61 zu einer Klemme 66 fließt, wodurch der Stößel 34 in Pfeilrichtung P um eine erste Wegstrecke betätigt wird. Zum Einschalten, also nach der Prüfphase, wird die zweite Schaltkontaktstelle geöffnet und die erste Schaltkontaktstelle 62 geschlossen, so daß ein Strom durch die gesamte Spule 61 fließt und der Stößel 34 entgegen der Kraft der Fesselfeder 60 weiter herausgefahren wird, wodurch der Klappanker 42 in die Einschaltstellung, durch 42a der Figur 6 dargestellt, verdreht wird. Da nach Öffnen die beiden Schaltkontaktstellen 62 und 63 ein Stromfluß durch die Spule 61 abgeschaltet ist, kann die Fesselfeder 60 den Stößel 34 wieder völlig in seine Ausgangsstellung zurückziehen. Damit wird der gesamte automatische Prüfvorgang von der Überwachungseinheit heraus gesteuert, die eine entsprechende elektronische Steuereinheit aufweist.

Da es beim Öffnen des magnetischen Kreises nur um sehr kleine Längenänderungen des Stößels 34 handelt, können für den Antrieb auch sog. mikrosystemtechnische Elemente zum Einsatz kommen, beispielsweise Piezoantriebe und Magnetostriktionselemente.

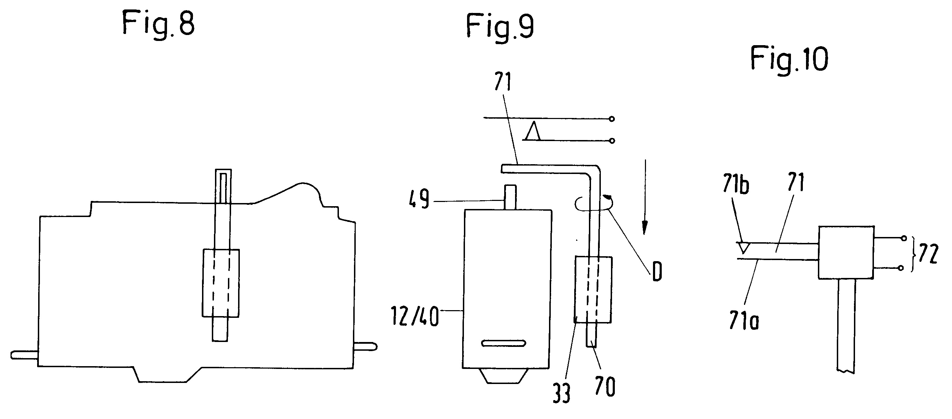

Eine weitere Ausführungsform der Erfindung ist den Figuren 8 und 9 zu entnehmen. Der Antrieb 33 ist dabei als Drehantrieb und der Stößel nicht mehr als Stößel, sondern als eine Art Kurbelwelle 70 ausgebildet, welche sich zur Verriegelung des Auslösestößels 49 in die Bewegungsbahn des Auslösestößels 49 gemäß Pfeilrichtung D verschwenkt. Die Kurbelwelle 70 kann dabei in Form eines Gewindes ausgebildet sein, so daß sich bei der Drehung der Kurbelwelle gleichzeitig auch eine Bewegung des Kurbelteiles 71 auf den Auslösestößel 49 zu ausbildet. Die Steigung ist dann in geeigneter Weise auszubilden. Die Umdrehung kann beispielsweise eine Achtelumdrehung sein.

Diese Ausführungsforn eignet sich besonders günstig für die Konstruktion eines Gerätes, das nachträglich an einen bestehenden, handelsüblichen Fehlerstromschutzschalter angebaut wird. Der Kurbelteil 71 greift dann über eine Öffnung im nicht näher dargestellten Gehäuse des handelsüblichen Fehlerstromschutzschalter in die Bewegungsbahn des Auslösestößels 49 ein. Zur Überwachung der Funktion bildet man, wie in Figur 10 dargestellt, den Stößel 71 in ähnlicher Weise wie den Stößel 34 der Figur 5 als Kontaktstrecke mit einem beweglichen Kontakt 71a und einem festen Kontakt 71b aus. Das Hochfahren des Auslösestößels betätigt die Kontaktstelle 71a/71b, wodurch an den Anschlußstellen 72 ein Signal abgenommen werden kann, das die Auslösebewegung und die Rückstellbewegung des Auslösestößels 49 einer Zentralstelle meldet.

## Patentansprüche

1. Fehlerstromschutzschalter mit Schaltkontakten (14, 15), die eine Trennstelle in den Netzleitern bilden, einem Summenstromwandler (10), durch den die Netzleiter ($L_1$, $L_2$, $L_3$) als Primärwicklungen hindurchgeführt sind, mit einer Sekundärwicklung (11), deren Ausgangssignal aufgrund eines Fehlerstromes auf ein Auslöserelais (12) übertragen wird, das ggf. über ein Schaltschloß (13) die Schaltkontakte öffnet, und mit einem eine Prüfkontaktstelle (20) enthaltenden Prüfstromkreis (21), bei dessen Schließen ein Fehlerstrom simuliert wird, gekennzeichnet durch eine Einrichtung (22), die den Prüfstromkreis (21) regelmäßig nach einer bestimmten Betriebsdauer automatisch kurzzeitig schließt, so daß das Auslöserelais (12) zum Ansprechen gebracht wird.

2. Fehlerstromschutzschalter nach Anspruch 1, dadurch gekennzeichnet, daß durch das Auslöserelais (12) die Schaltkontakte (14, 15) zu deren Öffnung angesteuert und ggf. sofort wieder geschlossen werden.

3. Fehlerstromschutzschalter nach Anspruch 1 oder 2, dadurch gekennzeichnet, daß die Einrichtung (22) die Prüfkontaktstelle (20) ansteuert.

4. Fehlerstromschutzschalter nach einem der Ansprüche 1 bis 3, dadurch gekennzeichnet, daß dem Prüfstromkreis (21) eine Überwachungseinrichtung (24) zugeordnet ist, die die Schaltkontakte (14, 15) in den Netzleitern (L1; L2...N) nach Öffnung aufgrund eines Prüfstromes sofort schließt.

5. Fehlerstromschutzschalter nach einem der vorherigen Ansprüche, dadurch gekennzeichnet, daß die Einrichtung (22) als Zeitschaltuhr ausgebildet ist, die in bestimmten zeitlichen Abständen die Prüfkontaktstelle (20) betätigt.

6. Fehlerstromschutzschalter nach einem der Ansprüche 1 bis 3, dadurch gekennzeichnet, daß die Einrichtung (22) durch die Funksignale des "Zeitzeichens" ansteuerbar ist.

7. Fehlerstromschutzschalter nach einem der Ansprüche 1 bis 3, dadurch gekennzeichnet, daß die Einrichtung (22) durch die Tag- und Nacht-Helligkeitsänderung detektierende Mittel (insbesondere Solarzellen) ansteuerbar ist.

8. Fehlerstromschutzschalter nach einem der Ansprüche 1 bis 3, dadurch gekennzeichnet, daß die Einrichtung (22) mittels eines die Tag-Nacht-Geräuschpegeländerung detektierenden Mittels angesteuert wird.

9. Fehlerstromschutzschalter nach einem der vorherigen Ansprüche, dadurch gekennzeichnet, daß den Schaltkontakten (14, 15) in den Netzleitern (L1; L2...N) ein Detektor (23) zugeordnet ist, der beim Öffnen der Schaltkontakte (14, 15) deren Stellung detektiert und der Überwachungseinrichtung (24) meldet.

10. Fehlerstromschutzschalter nach Anspruch 9, dadurch gekennzeichnet, daß der Detektor (23) als den Schaltkontakten (14, 15) zugeordnete und mit diesen mechanisch gekoppelte Hilfskontaktstelle (23) ausgebildet ist.

11. Fehlerstromschutzschalter nach einem der vorherigen Ansprüche, dadurch gekennzeichnet, daß weitere Mittel (33, 34) vorgesehen sind, die beim Auftreten und Auslösen des Prüfstromes den Anker (42) oder den Auslösestößel (49; 30) des Auslöserelais (12) in einer Stellung festhalten, die noch nicht zur Öffnung der Schaltkontakte (14, 15) führt, und nach Beendigung der Prüfung den Anker (42) oder den Auslösestößel (49; 30) wieder in die auslösebereite Stellung verbringen.

12. Fehlerstromschutzschalter nach Anspruch 11, dadurch gekennzeichnet, daß die weiteren Mittel einen Antrieb (33) für einen in die Bewegungsbahn des Ankers (42) oder des Auslöseströßels (49; 30) einschiebbaren Stößel (34) umfassen, welcher Antrieb zusammen mit der Prüfkontaktstelle (20) ansteuerbar ist.

13. Fehlerstromschutzschalter nach einem der vorherigen Ansprüche, mit einem Haltemagnetauslöser, der ein U-förmiges Joch mit einem Permanentmagneten, einen die Schenkel überdeckenden Klappanker sowie eine Auslösespule in einem Gehäuse aufweist, wobei der Auslösestößel aus dem Gehäuse herausragt, dadurch gekennzeichnet, daß der Stößel (34) durch eine Öffnung (52) im Gehäuse (40) geführt ist und im Prüffall auf den Klappanker (42) derart einwirkt, daß dieser bei Auslösung nach Zurücklegen nur eines Teils des Auslöseweges gegen den stößel (34) anschlägt, wobei der Antrieb (33) den Klappanker (42) wieder in auslösebereite Stellung zurückstellt.

14. Fehlerstromschutzschalter nach einem der Ansprüche 11 bis 13, dadurch gekennzeichnet, daß am Stößel (34) Mittel zur Detektierung des Anschlagens des Klappankers (42) bzw. des Auslösestößels (49) vorgesehen sind.

15. Fehlerstromschutzschalter nach Anspruch 14, dadurch gekennzeichnet, daß die Mittel zur Detektierung des Anschlagens des Klappankers (42) oder des Auslösestößels (49) Mikroschaltelemente sind.

16. Fehlerstromschutzschalter nach Anspruch 14, dadurch gekennzeichnet, daß der Stößel (34) einen festen Kontakt (34b) sowie einen damit zusammenwirkenden, vom Auslösestäßel (49) verformbaren Federkontakt (34a) aufweist.

17. Fehlerstromschutzschalter nach einem der Ansprüche 13 bis 16, dadurch gekennzeichnet, daß der Antrieb (33) ein Tauchankersystem und der Stößel (34) der Tauchanker ist, und daß am Stößel (34) eine Feder (60) angreift, welche diesen nach dem Prüffall in die Ausgangsstellung zurückzieht.

18. Fehlerstromschutzschalter nach einem der Ansprüche 13 bis 17, dadurch gekennzeichnet, daß die Spule (61) des als Tauchankersystem ausgebildeten Antriebs (33) zweigeteilt ist, dergestalt, daß bei Beaufschlagung eines ersten Teils (611) der Spule (60) der Stößel (34) in die Prüfstellung und bei Beaufschlagung auch des zweiten Teils (612) der Stößel (34) in diejenige Stellung verbracht wird, in der er den Klappanker (42) in die auslösebereite Stellung zurückstellt.

19. Fehlerstromschutzschalter nach Anspruch 13 und 17, dadurch gekennzeichnet, daß die Auslösespule (44) des Auslöserelais (12) eine Anzapfung aufweist, und daß die beim Öffnen und Wiederschließen des Klappankers entstehende Flußänderung ein Signal erzeugt, welches in einer Zentrale ausgewertet wird.

20. Fehlerstromschutzschalter nach einem der vorherigen Ansprüche, vorzugsweise der Ansprüche 10 bis 19, dadurch gekennzeichnet, daß die Prüf- und Überwachungseinrichtung in einem an einem handelsüblichen Fehlerstromschutzschalter anbringbaren, der Kontur des handelsüblichen Fehlerstromschutzschalters entsprechenden Anbaugehäuse untergebracht ist, wobei der Stößel ein Schwenkstößel (71) ist, der durch eine Ausnehmung im Gehäuse des handelsüblichen Fehlerstromschutzschalters in die Bewegungsbahn des Auslösestößels oder des Ankers eingreift.

## Claims

1. Earth-leakage circuit breaker having switch contacts (14, 15) which form a break in the mains leads, a summing current transformer (10), through which the mains leads ($L_1$, $L_2$, $L_3$) are passed as primary windings and which has a secondary winding (11) whose output signal, resulting from an earth-leakage current, is transmitted to a trip relay (12) which opens the switch contacts, if required via a switch mechanism (13), and having a test circuit (21), containing a test contact point (20), in the event of the closure of which an earth-leakage current is simulated, characterised by a device (22) which regularly, automatically closes the test circuit (21), briefly, after a specific operating period, so that the trip relay (12) is caused to respond.

2. Earth-leakage circuit breaker according to Claim 1, characterised in that the switch contacts (14, 15) are driven to open and, if required, are closed again immediately, by the trip relay (12).

3. Earth-leakage circuit breaker according to Claim 1 or 2, characterised in that the device (22) drives the test contact point (20).

4. Earth-leakage circuit breaker according to one of Claims 1 to 3, characterised in that a monitoring device (24) which closes the switch contacts (14, 15) in the mains leads (L1; L2...N) immediately after they open, as a result of a test current, is allocated to the test circuit (21).

5. Earth-leakage circuit breaker according to one of the preceding claims, characterised in that the device (22) is constructed as a time switch which operates the test contact point (20) at specific time intervals.

6. Earth-leakage circuit breaker according to one of Claims 1 to 3, characterised in that the device (22) can be driven by the radio signals of the "time signal".

7. Earth-leakage circuit breaker according to one of Claims 1 to 3, characterised in that the device (22) can be driven by means (preferably solar cells) detecting the brightness change between day and night.

8. Earth-leakage circuit breaker according to one of Claims 1 to 3, characterised in that the device (22) can be driven by means detecting the noise-level change between day and night.

9. Earth-leakage circuit breaker according to one of the preceding claims, characterised in that a detector (23), which, on opening of the switch contacts (14, 15), detects their position and signals said position to the monitoring device (24), is allocated to the switch contacts (14, 15) in the mains leads (L1; L2...N).

10. Earth-leakage circuit breaker according to Claim 9, characterised in that the detector (23) is constructed as an auxiliary contact point (23) which is allocated, and mechanically coupled, to the switch contacts (14, 15).

11. Earth-leakage circuit breaker according to one of the preceding claims, characterised in that further means (33, 34) are provided which, when the test current occurs and is tripped, fix the armature (42) or the tripping tappet (49; 30) of the trip relay (12) in a position which does not yet lead to opening of the switch contacts (14, 15) and, after completion of the test, return the armature (42) or the tripping tappet (49; 30) to the position where it is ready to trip.

**12.** Earth-leakage circuit breaker according to Claim 11, characterised in that the further means comprise a drive (33) for a tappet (34) which can be pushed into the movement path of the armature (42) or of the tripping tappet (49; 30), which drive can be driven together with the test contact point (20).

**13.** Earth-leakage circuit breaker according to one of the preceding claims, having a holding magnet trip device which has a U-shaped yoke with a permanent magnet, a hinged armature covering the limbs and a trip coil in a housing, the tripping tappet projecting from the housing, characterised in that the tappet (34) is guided through an opening (52) in the housing (40) and, during testing, acts on the hinged armature (42) in such a manner that the latter, on tripping, strikes against the tappet (34) after travelling through only a part of the tripping movement, the drive (33) restoring the hinged armature (42) to the position where it is ready to trip again.

**14.** Earth-leakage circuit breaker according to one of Claims 11 to 13, characterised in that means are provided on the tappet (34) for detecting the striking of the hinged armature (42) or of the tripping tappet (49).

**15.** Earth-leakage circuit breaker according to Claim 14, characterised in that the means for detecting the striking of the hinged armature (42) or of the tripping tappet (49) are microswitch elements.

**16.** Earth-leakage circuit breaker according to Claim 14, characterised in that the tappet (34) has a fixed contact (34b) and a spring contact (34a), interacting therewith, which can be deformed by the tripping tappet (49).

**17.** Earth-leakage circuit breaker according to one of Claims 13 to 16, characterised in that the drive (33) is a plunger-type armature system and the tappet (34) is the plunger-type armature, and in that a spring (60) engages on the tappet (34), which spring (60) pulls said tappet (34) back to the original position after testing.

**18.** Earth-leakage circuit breaker according to one of Claims 13 to 17, characterised in that the coil (61) of the drive (33), constructed as a plunger-type armature system, is in two parts, in such a manner that, if a first part (611) of the coil (60) is loaded, the tappet (34) is moved to the test position and, if a second part (612) is loaded as well, the tappet (34) is moved to that position in which it resets the hinged armature (42) to the position where it is ready to trip.

**19.** Earth-leakage circuit breaker according to Claims 13 and 17, characterised in that the trip coil (44) of the trip relay (12) has a tapping and in that the flux change occurring during opening and reclosing of the hinged armature generates a signal which is evaluated in a control centre.

**20.** Earth-leakage circuit breaker according to one of the preceding claims, preferably Claims 10 to 19, characterised in that the test and monitoring device is accommodated in a built-on housing which can be fitted to a commercially available earth-leakage circuit breaker and corresponds to the contour of the commercially available earth-leakage circuit breaker, the tappet being a pivoting tappet (71), which engages through a recess in the housing of the commercially available earth-leakage circuit breaker into the movement path of the tripping tappet or of the armature.

## Revendications

**1.** Disjoncteur à courant de défaut comportant des contacts de disjoncteur (14, 15) qui constituent un point de coupure dans des lignes du réseau, un convertisseur de courant principal (10) dans lequel les conducteurs du réseau ($L_1$, $L_2$, $L_3$, N) constituent l'enroulement primaire et qui comporte un enroulement secondaire (11) dont le signal de sortie résultant d'un courant de défaut est transmis à un relais de déclenchement (12) qui, le cas échéant, ouvre les contacts de disjoncteur par l'intermédiaire d'un verrou de maintien (13) ainsi qu'un circuit de contrôle qui comprend un contact de contrôle (21) dont la fermeture simule un courant de défaut, **caractérisé** par un dispositif (22) qui régulièrement, après une durée de fonctionnement déterminée, automatiquement et pour une courte durée ferme le circuit de contrôle (21), de telle sorte que le relais de déclenchement (12) réagisse.

**2.** Disjoncteur à courant de défaut selon la revendication 1, **caractérisé** par le fait que le relais de déclenchement (12) commande l'ouverture des contacts de disjoncteur (14, 15) et, le cas échéant, leur fermeture immédiate.

3. Disjoncteur à courant de défaut selon la revendication 1 ou la revendication 2, **caractérisé** par le fait que le dispositif (22) commande le contact de contrôle (20).

4. Disjoncteur à courant de défaut selon l'une des revendications 1 à 3, **caractérisé** par le fait qu'un dispositif de surveillance (24) est associé au circuit de contrôle (21), lequel dispositif ferme aussitôt les contacts de disjoncteur (14, 15) dans les lignes du réseau ($L_1$, $L_2$, ..., N) à la suite d'une ouverture résultant d'un courant de contrôle.

5. Disjoncteur à courant de défaut selon l'une des revendications précédentes, **caractérisé** par le fait que le dispositif (22) est agencé sous forme de commutateur à temps qui actionne le contact de contrôle (20) à intervalles de temps déterminés.

6. Disjoncteur à courant de défaut selon l'une des revendications 1 à 3, **caractérisé** par le fait que le dispositif (22) peut être commandé par les signaux radio du "top horaire".

7. Disjoncteur à courant de défaut selon l'une des revendications 1 à 3, **caractérisé** par le fait que le dispositif (22) peut être commandé par des moyens qui détectent les variations de luminosité entre le jour et la nuit (en particulier par des cellules solaires).

8. Disjoncteur à courant de défaut selon l'une des revendications 1 à 3, **caractérisé** par le fait que le dispositif (22) est commandé par des moyens qui détectent une variation du niveau de bruit entre le jour et la nuit.

9. Disjoncteur à courant de défaut selon l'une des revendications précédentes, **caractérisé** par le fait qu'un détecteur (23) est associé aux contacts de disjoncteur (14, 15) dans les lignes du réseau ($L_1$, $L_2$, ..., N) lequel détecteur, lors de l'ouverture des contacts de disjoncteur (14, 15) détecte leur position et informe le dispositif de surveillance (24).

10. Disjoncteur à courant de défaut selon la revendication 9, **caractérisé** par le fait que le détecteur (23) est agencé sous forme de contact auxiliaire (23) associé aux contacts de disjoncteur (14, 15) et couplé à ceux-ci par des moyens mécaniques.

11. Disjoncteur à courant de défaut selon l'une des revendications précédentes, **caractérisé** par le fait qu'il est prévu des moyens (33, 34) supplémentaires qui, lors de l'apparition et du déclenchement du courant de contrôle, maintiennent l'armature (42) ou le poussoir de déclenchement (49, 30) du relais de déclenchement (12) dans une position qui ne provoque pas encore l'ouverture des contacts de disjoncteur (14, 15) et, le contrôle terminé, ramènent l'armature (42) ou le poussoir de déclenchement (49, 30) dans la position d'attente du déclenchement.

12. Disjoncteur à courant de défaut selon la revendication 11, **caractérisé** par le fait que les moyens supplémentaires comprennent un moyen d'entraînement (33) pour un poussoir (34) qui peut être amené sur la trajectoire de déplacement de l'armature (42) ou du poussoir de déclenchement (49, 30), lequel moyen d'entraînement peut être commandé en même temps que le contact de contrôle (20).

13. Disjoncteur à courant de défaut selon l'une des revendications précédentes comportant un déclencheur à aimant de maintien qui présente une culasse en forme de U avec un aimant permanent, une armature battante qui couvre les branches ainsi qu'une bobine de déclenchement logée dans un boîtier, le poussoir de déclenchement faisant saillie hors dudit boîtier, **caractérisé** par le fait que le poussoir (34) est guidé à travers une ouverture (52) dans le boîtier (40) et, lors d'une opération de contrôle, agit sur l'armature battante (42) de manière telle que celle-ci, lors du déclenchement, vienne en butée sur le poussoir (34) après avoir parcouru une partie seulement de la course de déclenchement, le moyen d'entraînement (33) ramenant l'armature battante (42) dans la position d'attente du déclenchement.

14. Disjoncteur à courant de défaut selon l'une des revendications 11 à 13, **caractérisé** par le fait qu'il est prévu sur le poussoir (34) des moyens permettant de détecter la butée de l'armature battante (42) ou du poussoir de déclenchement (49).

15. Disjoncteur à courant de défaut selon la revendication 14, **caractérisé** par le fait que les moyens de détection de la butée de l'armature battante (42) ou du poussoir de déclenchement (49) sont des micro-contacts.

16. Disjoncteur à courant de défaut selon la revendication 14, **caractérisé** par le fait que le poussoir (34) comporte un contact (34b) fixe ainsi qu'un contact élastique (34a) qui coopère avec le premier et peut être déformé par le poussoir de déclenchement (49).

17. Disjoncteur à courant de défaut selon l'une des revendications 13 à 16, **caractérisé** par le fait que le moyen d'entraînement (33) est un système à armature plongeuse et que le poussoir (34) est l'armature plongeuse, et par le fait qu'un ressort (60) agit sur le poussoir (34) et ramène celui-ci dans sa position d'origine une fois le contrôle terminé.

18. Disjoncteur à courant de défaut selon l'une des revendications 13 à 17, **caractérisé** par le fait que la bobine (61) du moyen d'entraînement agencé sous forme de système à armature plongeuse est divisée en deux parties de manière telle que lorsqu'une première partie (611) de la bobine (60) est alimentée, le poussoir (34) soit amené dans la position de contrôle et que lorsque la deuxième partie (612) est alimentée, le poussoir (34) soit amené dans la position dans laquelle il ramène l'armature battante (42) dans la position d'attente du déclenchement.

19. Disjoncteur à courant de défaut selon la revendication 13 et la revendication 17, **caractérisé** par le fait que la bobine de déclenchement (44) du relais de déclenchement (12) présente un piquage et par le fait que la variation de flux produite lors de l'ouverture et de la fermeture de l'armature battante génère un signal qui est exploité dans un poste central.

20. Disjoncteur à courant de défaut selon l'une des revendications précédentes, de préférence selon les revendications 10 à 19, **caractérisé** par le fait que le dispositif de contrôle et de surveillance est logé dans un boîtier séparé qui peut être monté sur un disjoncteur à courant de défaut du commerce et dont le contour est adapté audit disjoncteur de courant de défaut du commerce, le poussoir étant un poussoir pivotant (71) qui, par une ouverture dans le boîtier du disjoncteur à courant de défaut du commerce, pénètre sur la trajectoire de déplacement du poussoir de déclenchement ou de l'armature.

EP 0 502 393 B1

Fig.1

Fig.2

Fig.3

N    L₁

31

34

33

32    30

12

U

Fig.4

33    34    46    49    31    32    50

47    42

P

α

48    α/2

43

45    41a    41    44    12    40

Fig.5

33    34b

34    34a

Fig.6

Fig.7

Fig.8

Fig.9

Fig.10

EP 0 502 393 B1